Europäisches Patentamt

European Patent Office

Office européen des brevets

(19)

(11) Numéro de publication: **0 308 662 B1**

(12) **FASCICULE DE BREVET EUROPEEN**

(45) Date de publication de fascicule du brevet:
18.12.91

(51) Int. Cl.⁵: **A61C 17/00, B06B 1/02**

(21) Numéro de dépôt: **88113638.6**

(22) Date de dépôt: **22.08.88**

(54) **Détartreur dentaire.**

(30) Priorité: **25.08.87 CH 3259/87**

(43) Date de publication de la demande:
**29.03.89 Bulletin 89/13**

(45) Mention de la délivrance du brevet:
**18.12.91 Bulletin 91/51**

(84) Etats contractants désignés:
**AT DE FR GB IT NL SE**

(56) Documents cités:
**DE-A- 2 241 189     DE-U- 8 507 777**
**FR-A- 2 181 067     US-A- 3 743 868**
**US-A- 4 332 558     US-E- 28 752**

(73) Titulaire: **BIEN-AIR SA**
**Länggasse 60**
**CH-2500 Bienne 6(CH)**

(72) Inventeur: **Hetzel, Max**
**Jurastrasse 563**
**CH-4707 Deitingen(CH)**

(74) Mandataire: **Ebbinghaus, Dieter et al**
**v. FÜNER, EBBINGHAUS, FINCK Patentanwäl-**
**te European Patent Attorneys Mariahilfplatz**
**2 & 3**
**W-8000 München 90(DE)**

Rank Xerox (UK) Business Services

## Description

La présente invention concerne un appareil électrique utilisé dans l'art dentaire pour enlever le tartre se trouvant sur les dents.

De tels appareils sont bien connus, généralement sous le nom de détartreurs dentaires. Facilitant le travail du praticien, ils sont d'un usage courant dans les cabinets dentaires. Ces appareils se présentent sous la forme d'un manchon cylindrique pouvant être tenu à la main et comportant, à une extrémité, un câble électrique souple et, à l'autre extrémité, un racloir vibrant. Les déplacements rapides du racloir permettent, lorsqu'il est mis en contact du tartre, de le fissurer et de le détacher facilement de la dent sur laquelle il est déposé.

Dans une forme de réalisation, décrite dans le fascicule de brevet FR-A-2181067, le détartreur comprend, disposés à l'intérieur du manchon, un transducteur piézoélectrique et un amplificateur électronique. Une extrémité du transducteur est fixe, étant par exemple solidaire du manchon, alors que l'autre extrémité, qui est libre de se déplacer, constitue un ventre de déplacement et elle supporte le racloir dont une partie sort du manchon. Le transducteur et l'amplificateur sont connectés ensemble de manière à former un oscillateur qui est alimenté en énergie par le cable électrique. Dans cet oscillateur, le transducteur joue le rôle d'un résonateur vibrant longitudinalement sur sa fréquence fondamentale, et l'amplificateur celui d'un circuit d'entretien compensant les pertes du résonateur. L'extrémité libre du transducteur vibre alors à une fréquence d'environ 30kHz et entraine dans son mouvement longitudinal le racloir.

L'efficacité d'un détartreur est d'autant meilleure que l'amplitude de la vibration du racloir est grande. Dans la réalisation décrite, elle est égale à l'amplitude du déplacement de l'extrémité libre du transducteur, qui dépend, de son côté, de l'énergie qui lui est fournie par l'oscillateur. Cette énergie ne peut cependant pas dépasser une certaine limite sans entraîner une dissipation thermique suffisamment importante pour rendre le manchon désagréable à tenir à main. Aux niveaux d'énergie acceptables, l'amplitude du racloir est, dans ces conditions, insuffisante pour donner au détartreur toute l'efficacité souhaitée, ce qui constitue un inconvénient important puisque le travail du praticien s'en trouve fortement ralenti.

La présente invention se propose de fournir un détartreur dentaire dans lequel, afin d'améliorer son efficacité, l'amplitude de déplacement du racloir est supérieure à celle du transducteur.

Pour atteindre cet objectif, le détartreur selon l'invention est particulièrement remarquable en ce qu'il comporte en outre, un organe de liaison élastique fixé au transducteur à l'endroit du ventre de déplacement, et une masselotte solidaire de l'organe de liaison et supportant le racloir, la masselotte et le racloir formant avec l'organe de liaison un système vibrant présentant une fréquence de résonance sensiblement égale à la fréquence de vibration du transducteur.

D'autres caractéristiques et avantages de la présente invention ressortiront de la description qui va suivre, faite en regard du dessin annexé et donnant, à titre explicatif mais nullement limitatif, une forme de réalisation d'un tel détartreur dentaire. Sur ce dessin, où les mêmes références se rapportent à des éléments analogues :

- la fig. 1 est une vue générale d'une forme de réalisation du détartreur selon l'invention;
- la fig. 2 est une vue en coupe montrant la disposition des différents éléments composant le détartreur de la fig. 1; et
- la fig. 3 représente le transducteur avec ses électrodes, le racloir, et le schéma de l'amplificateur auquel les électrodes sont connectées.

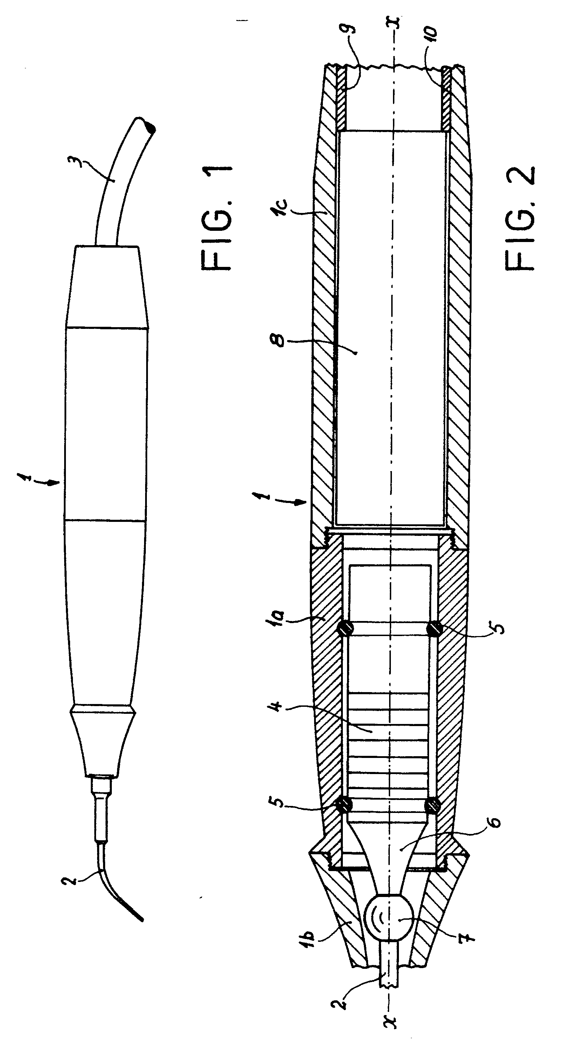

En référence au dessin, la fig. 1 montre une forme de réalisation du détartreur dentaire selon l'invention. La référence 1 sur cette figure désigne un manchon creux, sensiblement cylindrique ayant typiquement 15 cm de long et 2 cm de diamètre, destiné à être tenu à la main par le médecin traitant. Le manchon peut avantageusement comporter plusieurs pièces cylindriques, assemblées par vissage, la séparation de ces pièces permettant l'accès aux éléments internes.

De l'une des extrémités du manchon dépasse un racloir 2 destiné à enlever le tartre déposé sur une dent non représentée. A l'extrémité opposée du manchon I est raccordé un câble électrique 3. Ce câble comporte deux conducteurs et il relie le manchon à une source de tension fixe connectée au réseau, non représentée, fournissant au détartreur l'énergie électrique nécessaire pour mettre le racloir 2 en mouvement. Le raccord du câble 3 au manchon I est préférentiellement réalisé au moyen d'un connecteur universel de type connu non représenté, permettant de séparer aisément le câble du détartreur. Le même câble peut ainsi servir à alimenter aussi bien un détartreur que, par exemple, une pièce à main comportant une fraise. Bien entendu au câble peuvent aussi être associées des conduits pour le transport de fluides, tels que l'eau ou l'air, le connecteur universel assurant le raccord de ces conduits à des conduits correspondants disposés dans le manchon et débouchant au voisinage du racloir de manière que ces fluides puissent atteindre la dent.

La fig.2 montre, dans une vue en coupe, la constitution interne du détartreur. Le manchon I est composé de trois parties creuses référencées 1a, 1b et 1c, disposées les unes à la suite des autres, la partie 1a se trouvant au milieu. Chaque partie est vissée sur la partie voisine, le tout formant un corps de révolution creux.

A l'intérieur de la partie centrale 1a du manchon l est disposé un transducteur piézoélectrique 4 qui sera décrit en détail par la suite. Ce transducteur a la forme d'un cylindre allongé présentant un axe de symétrie xx' qui, sur la fig. 2, vient se confondre avec l'axe de révolution du manchon. Deux anneaux élastiques 5 assurent la suspension du transducteur à l'intérieur de la partie 1a en prenant appui sur des gorges circulaires pratiquées dans les faces en regard de ces deux éléments. Enfin l'extrémité active du transducteur, celle qui correspond au ventre du déplacement, supporte, directement ou par l'intermédiaire d'éléments de couplage 6, 7 qui seront décrits par la suite, le racloir 2 qui sort du manchon 1 par 1a partie 1b.

Dans la partie 1c se trouve un amplificateur électronique 8. Cet amplificateur comporte une entrée, une sortie et deux bornes d'alimentation. L'entrée et la sortie sont reliées au transducteur 4 par des connexions non représentées, alors que les bornes d'alimentation sont reliées à deux conducteurs 9, 10 faisant partie du connecteur universel.

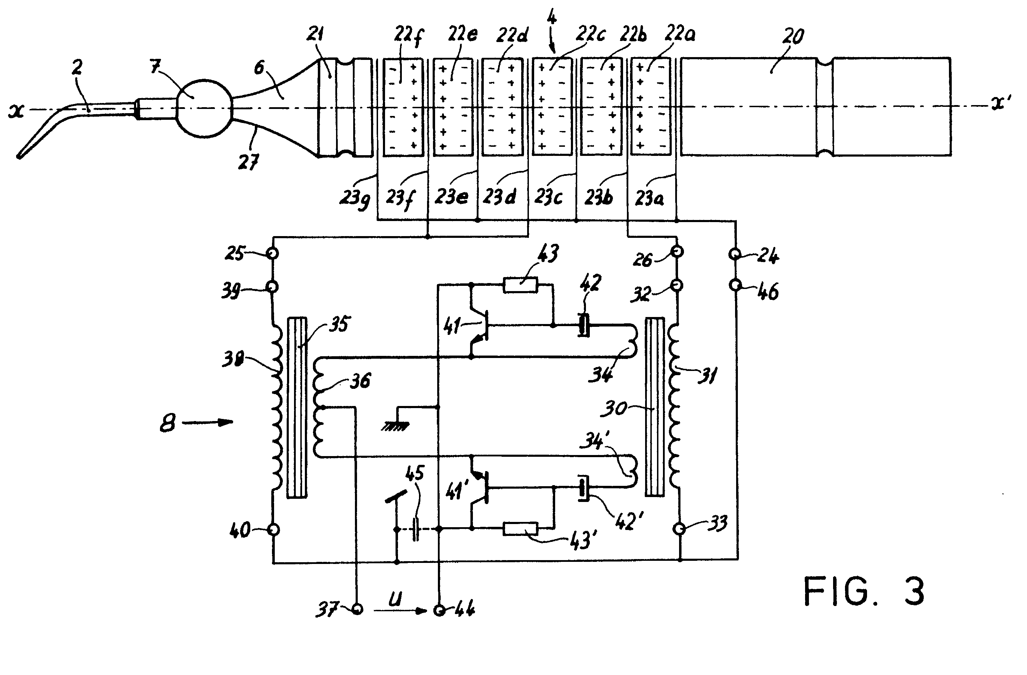

Le transducteur 4, représenté en détail sur la fig. 3, comprend essentiellement une base 20, une tête 21, six pastilles piézoélectriques référencées 22a à 22f, et sept électrodes référencées 23a à 23g.

La base 20 est un cylindre en métal dont l'axe de symétrie est l'axe xx'. Les dimensions de la base sont choisies de manière que, dans la masse totale du transducteur, celle de la base soit prépondérante. La base présente donc une grande inertie. Il en résulte que, lorsque le transducteur vibre, la base reste pratiquement immobile et constitue ainsi un noeud de déplacement du transducteur.

Les pastilles piézoélectriques 22a ... 22f sont des disques cylindriques plats, identiques les uns aux autres. Chaque pastille est taillée dans une matière piézoélectrique de manière qu'une contrainte de pression axiale fasse apparaître des charges positives sur l'une de ses faces principales, et des charges négatives sur l'autre face. Les pastilles 22a ... 22f sont alignées le long de l'axe xx', les unes à la suite des autres, la pastille 22a étant en regard de la base 20. Les pastilles sont par ailleurs orientées de manière que les faces principales adjacentes portent des charges de même signe lorsque ces pastilles sont soumises à une contrainte axiale. Contre la face principale libre de la pastille 22f est appliquée la tête 21, cette tête étant constituée par un disque métallique de forme cylindrique ayant une masse plus faible que celle de la base 20. Les électrodes 23a ... 23g sont enfin disposées contre les faces principales des pastilles 22a ... 22f. L'électrode 23a est ainsi placée entre la base 20 et la pastille 22a, l'électrode 23b entre les pastilles 22a et 22b etc, et l'électrode 23g entre la pastille 22f et la tête 21.

Pour rendre la fig. 3 plus claire, un espace a été ménagé de chaque côté des pastilles 22a ... 22f, une des électrodes 23a ... 23g étant disposée dans chacun de ces espaces. En réalité les pastilles et les électrodes sont enserrées entre la base 20 et la tête 21 de manière à être en contact les unes avec les autres. Le tout forme ainsi un bloc dont les différents éléments sont maintenus ensemble par collage et au moyen d'une vis centrale non représentée joignant la base à la tête.

Les électrodes 23a, 23c, 23e et 23g, c'est-à-dire toutes les électrodes impaires comptées à partir d'une des extrémités du transducteur, sont reliées à une borne de masse 24 du transducteur. Les électrodes 23d et 23f, c'est-à-dire les électrodes paires, sauf la deuxième électrode comptée à partir de la base 20, sont reliées à une borne d'entrée 25. Enfin la deuxième électrode 23b est reliée à une borne de sortie 26. Les bornes 25 et 24 forment l'entrée du transducteur, et les bornes 26 et 24 sa sortie.

L'application d'une tension alternative entre les bornes 25 et 24 provoque la vibration du transducteur à la fréquence de cette tension. Une tension de même fréquence apparaît alors entre les bornes 26 et 24, l'amplitude de cette tension étant proportionnelle à l'amplitude de la vibration.

La base 20 du transducteur restant pratiquement au repos, ce sont la pastille 22f et la tête 21 qui vibrent avec la plus grande amplitude et constituent ainsi un ventre de déplacement du transducteur. Lorsque la fréquence de la tension appliquée entre les bornes 25 et 24 est égale à la fréquence de résonance fondamentale du transducteur relié au racloir, l'amplitude de déplacement de la tête passe par un maximum. Pour que cette amplitude corresponde à des conditions de travail optimum du détartreur, la tension doit être de l'ordre de 600 volts.

Le racloir 2 peut être fixé directement à l'endroit du ventre de déplacement du transducteur, son amplitude de vibration étant alors identique à celle de la tête 21. Cependant pour améliorer l'efficacité du racloir il y a intérêt à amplifier son déplacement par rapport à celui de la tête. Ceci est obtenu dans la présente invention en reliant le racloir 2 à la tête 21 par des moyens de couplage comprenant une masselotte 7 supportant le racloir et un organe de liaison élastique 6 disposé, entre la masselotte et la tête. La masselotte avec le racloir et l'organe de liaison forment un système vibrant. En accordant la fréquence de résonance de ce système sur une fréquence sensiblement égale à la fréquence de vibration de la tête, et si la masse de la masselotte et du racloir est inférieure à celle de l'extrémité active du transducteur, l'amplitude de déplacement du racloir sera supérieure à celle de la tête. La masselotte 7 aura avantageusement une forme sphérique et l'organe de liaison 6 celle d'un corps de révolution engendré par une courbe exponentielle 27 tournant autour de l'axe xx', la partie ayant la plus forte section de l'organe de liaison se trouvant du côté de la tête 21. La tête 21, la masselotte 7 et l'organe de liaison 6 seront de préférence réalisés de manière à ne former qu'une seule et même pièce en métal.

La tension à l'entrée du transducteur 4 est fournie par l'amplificateur 8 représenté sur la fig. 3. La référence 30 sur cette figure désigne un transformateur abaisseur de tension comportant un primaire 31, ayant deux bornes référencées 32 et 33, et un secondaire formé de deux enroulements identiques 34 et 34', le rapport entre le nombre de spires du primaire et de l'un des enroulements secondaires étant de l'ordre de 1000. De même la référence 35 désigne un transformateur élévateur de tension comportant un primaire 36 pourvu d'une prise médiane reliée à une borne 37, et un secondaire ayant deux bornes référencées 39 et 40, le rapport entre le nombre de spires du primaire et du secondaire étant d'environ 1/10. Les bornes 33 et 40 sont reliées à une borne 46 constituant la masse électrique de l'amplificateur 8 dont l'entrée est formée par les bornes 32 et 46 et la sortie par les bornes 39 et 46.

Entre le secondaire du transformateur 30 et le primaire du transformateur 35 est connecté un circuit amplificateur de puissance, connu de l'art antérieur, comportant deux parties symétriques. Dans l'une des parties un transistor bipolaire 41 du type NPN a son émetteur relié à l'une des bornes de l'enroulement 34 et à l'une des bornes de l'enroulement 36. La base de ce transistor est connectée à travers un condensateur 42 d'environ 6 microfarads à l'autre borne de l'enroulement 34. Enfin une résistance de polarisation 43 d'environ 2000 ohms relie la base au collecteur du transistor 41, le collecteur étant connecté, de son côté, à une borne 44. L'autre partie du circuit est composée des éléments 41', 42' et 43', identiques respectivement aux éléments 41, 42 et 43, et qui sont connectés de la même manière que ces derniers, mais entre l'enroulement 34' et l'autre borne de l'enroulement 36. Les bornes 37 et 44 constituent les bornes d'alimentation du circuit et elles sont reliées respectivement aux conducteurs 9 et 10 du connecteur universel.

Comme les signaux aux bornes des enroulements entre lesquels le circuit amplificateur est connecté ont des amplitudes faibles, le circuit peut être alimenté par une basse tension continue.

Les collecteurs des transistors 41 et 41' étant connectés à la borne 44, il y a intérêt à relier cette borne à la masse du manchon 1, qui constitue aussi la masse de l'appareil. En effet, comme dans un transistor de puissance le collecteur est solidaire d'une électrode massive servant à évacuer la chaleur, cette disposition permet de fixer directement l'électrode sur le manchon 1 pour améliorer encore le refroidissement du transistor. Les bornes 46 et 44, correspondant respectivement à la masse électrique et à la masse de l'appareil, peuvent être indépendantes, liées galvaniquement ou, de préférence, connectées ensemble par un condensateur de découplage 45 d'environ 0.1 microfarad.

Le transducteur 4 est relié à l'amplificateur 8 pour former un oscillateur, le transducteur couplé au racloir 2 jouant le rôle de résonateur et l'amplificateur celui du circuit d'entretien. La liaison est réalisée en connectant les bornes 24, 25 et 26 respectivement aux bornes 46, 39 et 32. L'application d'une tension d'alimentation continue U, typiquement de 24 volts, fournie par la source de tension et rendant la borne 44 positive par rapport à la borne 37, entraînera alors le démarrage de l'oscillateur si le gain de l'amplificateur compense les pertes du transducteur, l'amplitude de l'oscillation dépendant de la valeur de la tension U.

Bien entendu le détartreur dentaire qui vient d'être décrit peut subir différentes modifications et se présenter sous d'autres variantes, évidentes à l'homme du métier, sans sortir du cadre de la présente invention.

Le transducteur pourrait ainsi comporter un nombre différent de pastilles piézoélectriques et les électrodes être connectées entre elles de manière à ne présenter que deux bornes. L'amplificateur pourrait également être réalisé différemment, par exemple pour former avec le transducteur, lorsque celui-ci ne comporte que deux bornes, un oscillateur du type Colpitts.

**Revendications**

1. Détartreur dentaire comprenant un manchon creux (1) de forme allongée destiné à être tenu à la main, et, à l'intérieur du manchon :
   - un transducteur piézoélectrique (4) vibrant comportant une première extrémité ou base (20), une deuxième extrémité ou tête (21), et une entrée (25, 24) et une sortie (26, 24) électrique, lesdites extrémités étant alignées sur un axe (xx') disposé suivant le sens longitudinal du manchon;
   - un racloir (2) relié à la tête (21) par des moyens de couplage, une partie du racloir sortant du manchon (1) par une ouverture de celui-ci; et
   - un amplificateur (8) de signaux électriques comportant une entrée (32, 46), une sortie (39, 46) et des bornes d'alimentation (37, 44) recevant d'une source extérieure l'énergie électrique nécessaire au fonctionnement du détartreur, l'entrée et la sortie de l'amplificateur étant connectées respectivement à la sortie (26, 24) et à l'entrée (25, 24) du transducteur pour former un oscillateur, l'amplificateur ayant la fonction d'un circuit d'entretien et le transducteur celle d'un résonateur vibrant longitudinalement suivant ledit axe (xx'), la base (20) et la tête (21) se trouvant respectivement à un noeud et à un ventre de déplacement, caractérisé en ce que lesdits moyens de couplage comprennent :
- un organe de liaison élastique (6) fixé au transducteur à l'endroit du ventre de déplacement; et
- une masselotte (7) solidaire de l'organe de liaison (6) et supportant ledit racloir (2), la masselotte et le racloir formant avec l'organe de liaison un système vibrant présentant une fréquence de résonance sensiblement égale à la fréquence de vibration du transducteur (4).

2. Détartreur selon la revendication 1, caractérisé en ce que ledit organe de liaison (6) est fixé sur ladite tête (21) du transducteur (4).

3. Détartreur selon la revendication 1 ou 2, caractérisé en ce que ledit organe de liaison (6) et ladite masselotte (7) sont des corps de révolution ayant un axe de révolution commun qui coïncide avec ledit axe de symétrie (xx') du transducteur.

4. Détartreur selon l'une des revendications précédentes, caractérisé en ce que la masse de la masselotte (7) est inférieure à la masse de la tête (21) afin que l'amplitude de déplacement de la masselotte, à la fréquence de résonance, soit supérieure à l'amplitude de déplacement de la tête.

5. Détartreur selon l'une des revendications précédentes, caractérisé en ce que la tête (21), l'organe de liaison (6) et la masselotte (7) forment une seule et même pièce en métal.

## Claims

1. Dental detartarizer comprising an elongated hollow sleeve (1) to be held in the hand and, inside the sleeve:
- a vibrating piezoelectric transducer (4) having a first end or base (20), a second end or head (21), and an electrical input (25, 24) and output (26, 24), the said ends being aligned on an axis (xx') arranged in the longitudinal direction of the sleeve;
- a scraper (2) connected to the head (21) by coupling means, a part of the scraper emerging from the sleeve (1) by way of an opening therein; and
- an electrical signal amplifier (8) having an input (32, 46), an output (39, 46) and supply terminals (37, 44) receiving from an external source the electrical energy necessary for the operation of the detartarizer, the input and the output of the amplifier being connected, respectively, to the output (26, 24) and the input (25, 24) of the transducer so as to form an oscillator, the amplifier having the function of a maintenance circuit and the transducer that of a resonator vibrating in the longitudinal direction along the said axis (xx'), the base (20) and the head (21) being located at a node and at an antinode of displacement, respectively, **characterised in that** the said coupling means comprise:
- an elastic connection element (6) attached to the transducer at the location of the antinode of displacement; and
- a weight (7) solidly attached to the connection element (6) and supporting the said scraper (2), the weight and the scraper forming with the connection element a vibrating system having a resonant frequency substantially equal to the frequency of vibration of the transducer (4).

2. Detartarizer according to claim 1, **characterised in that** the said connection element (6) is attached to the said head (21) of the transducer (4).

3. Detartarizer according to claim 1 or 2, **characterised in that** the said connection element (6) and the said weight (7) are bodies of revolution having a common axis of revolution which coincides with the said axis of symmetry (xx') of the transducer.

4. Detartarizer according to one of the preceding claims, **characterised in that** the mass of the weight (7) is less than the mass of the head (21) so that the amplitude of displacement of the weight, at the resonant frequency, is greater than the amplitude of displacement of the head.

5. Detartarizer according to one of the preceding claims, **characterised in that** the head (21), the connection element (6) and the weight (7) form a single metal piece.

**Patentansprüche**

1. Zahnsteinentferner mit einer in der Hand zu haltenden, länglich geformten, hohlen Muffe (1) und im Inneren der Muffe

   - mit einem vibrierenden piezoelektrischen Wandler (4) mit einem ersten Ende oder Fuß (20), einem zweiten Ende oder Kopf (21), einem elektrischen Eingang (25, 24) und einem elektrischen Ausgang (26, 24), wobei die Enden auf einer in Längsrichtung der Muffe angeordneten Achse (xx') ausgerichtet sind,
   - mit einem durch Kopplungseinrichtungen mit dem Kopf (21) verbundenen Kratzer (2), wobei ein Teil des Kratzers durch eine Öffnung der Muffe aus dieser herausragt, und
   - mit einem Verstärker (8) für elektrische Signale mit einem Eingang (32, 46), einem Ausgang (39, 46) und Anschlußklemmen (37, 44), die von einer äußeren Quelle die für den Betrieb des Zahnsteinentferners notwendige elektrische Energie erhalten, wobei der Eingang und der Ausgang der Verstärkers zur Bildung eines Oszillators mit dem Ausgang (26, 24) bzw. dem Eingang (25, 24) des Wandlers verbunden sind, der Verstärker die Funktion eines Speisekreises und der Wandler die eines in Längsrichtung der Achse (xx') vibrierenden Resonators hat, wobei sich der Fuß (20) und der Kopf (21) an einem Knoten bzw. an einem Bauch der Verschiebung befinden,
   dadurch gekennzeichnet, daß die Kopplungseinrichtungen
   - eine an dem Wandler an der Stelle des Verschiebungsbauches befestigte elastische Verbindungseinrichtung (6) und
   - ein mit der Verbindungseinrichtung (6) verbundenes und den Kratzer (2) tragendes Reguliergewicht (7) aufweisen, wobei das Reguliergewicht und der Kratzer mit der Verbindungseinrichtung ein vibrierendes System mit einer Resonanzfrequenz bilden, die im wesentlichen der Vibrationsfrequenz des Wandlers (4) gleicht.

2. Zahnsteinentferner nach Anspruch 1, dadurch gekennzeichnet, daß die Verbindungseinrichtung (6) auf dem Kopf (21) des Wandlers (4) befestigt ist.

3. Zahnsteinentferner nach Anspruch 1 oder 2, dadurch gekennzeichnet, daß das Verbindungsorgan (6) und das Reguliergewicht (7) Rotationskörper mit einer gemeinsamen Rotationsachse sind, die mit der Symmetrieachse (xx') des Wandlers zusammenfällt.

4. Zahnsteinentferner nach einem der vorhergehenden Ansprüche, dadurch gekennzeichnet, daß die Masse des Reguliergewichts (7) kleiner als die Masse des Kopfes (21) ist, damit die Verschiebungsamplitude des Reguliergewichts bei der Resonanzfrequenz größer ist als die Verschiebungsamplitude des Kopfes.

5. Zahnsteinentferner nach einem der vorhergehenden Ansprüche, dadurch gekennzeichnet, daß der Kopf (21), die Verbindungseinrichtung (6) und das Reguliergewicht (7) aus ein und demselben Metallstück geformt sind.

FIG. 1

FIG. 2

FIG. 3